# EUROPEAN PATENT SPECIFICATION

(11) **EP 3 385 586 B1**
(45) Date of publication and mention of the grant of the patent: **08.05.2024**
(21) Application number: 16823339.3
(22) Date of filing: 02.12.2016
(51) Int. Cl.: F04D 9/00, F16K 31/22, F16K 24/04, F04B 47/00, F04B 23/02, F04D 13/16

(54) **AIR-RETENTION VALVE FOR PRESSURISED WATER RESERVOIR**
LUFTRÜCKHALTEVENTIL FÜR DRUCKWASSERBEHÄLTER
VALVE DE RETENUE D'AIR POUR RÉSERVOIR D'EAU SOUS PRESSION

(30) Priority: 02.12.2015 PT 2015109003
(43) Date of publication of application: 10.10.2018
(73) Proprietor: Sofia Machado Brazão, Filipa, 4820-417 Fafe (PT)
(72) Inventor: MARINHO OLIVEIRA, Valdemar, 4820-417 Fornelos, Fafe (PT); SANTOS OLIVEIRA, Hélio João, 4820-417 Fornelos, Fafe (PT)
(74) Representative: Patentree
(86) International application number: PCT/IB2016/057308
(87) International publication number: WO 2017/093964

(56) References cited:
- FR-A- 647 385
- US-A- 1 064 386
- US-A- 1 857 409
- US-A- 3 581 763
- US-A- 4 723 565

## Description

### Technical field

The present disclosure relates to pressurized hydropneumatic water tanks including a valve to be used in said tanks coupled to submersible pumps, surface pumps or clean water pumping systems.

### Background

The extraction of groundwater from deep wells and surface water for consumption is carried out using pumps. These pumps are subsequently coupled to pressure tanks, in particular tanks provided with rubber membrane or tanks with air injection valves.

In the case of tanks with rubber membranes, the rubber membrane has the function of separating water and air; the air is retained outside of the elastic membrane, i.e., the air is retained between the membrane and the inner wall of the tank. Air exerts pressure on the water through the membrane, thus keeping the system pressurized. In such a way, water circulates inside the membrane. The rubber membrane is expanded and contracted with the working cycle.

Tanks with rubber membranes have several disadvantages, namely the need for maintenance, as there are pressure losses in the working cycles; the rubber membrane often tears with the lack of maintenance or under a wrong pressure differential, in particular when the injection of air pressure in the tank is higher than the minimum operating pressure of the system. As a consequence of said disadvantages, the water pump is forced to operate under abnormal conditions, often resulting in failure, which results in a higher cost for the owner. Another disadvantage associated with the use of rubber membranes in pressurized water tanks is due to the fact that the rubber membrane is produced as an injection-moulded part, with a large surface and prone to injection defects, for example, pores that are revealed after some time in operation. With air entering the piping, water/air splashing and/or scalding may be generated when supplied by gas water heaters. In addition to these disadvantages the membrane leaves an unpleasant taste in the water and the fixing of the membrane in the upper part of the tank is prone to installation defects and consequent loss of air.

A tank with air injection valves is another frequently used system for water storage under pressure, for example, resulting from groundwater extraction. When tanks with air injection valves are used and the water pump is stopped, the water in the piping between the air feeding valve and the water discharge valve is discharged and leads to air in the system. When the pump starts operating again, it injects this air volume into the tank. The air excess is released through a regulating valve which is usually placed 1/3 of the tank height and which in contact with the air, releases it. In contact with water it remains closed, and in this way it keeps the ideal air to water proportions.

The disadvantages of using a tank with air injection valves are the following, when a power failure occurs, or the water flow rate out of the tank is higher than that supplied by the water pump, the pressurized air is totally lost , requiring a high number of working cycles, which usually take several weeks until the system replaces the amount of pressurized air required. With air entering the piping, it will create problems for users, for example water/air splashing, scalding when supplied by gas water heaters. In addition, said valves add costs and more elements to the system that are susceptible to failure and maintenance.

US4723565 discloses an apparatus for regulating the flow of a subject fluid which includes immiscible fluids having differing densities such as oil and water, wherein plug means are provided which sink in oil and float in water, said plug means being positioned to control the flow of fluids through a scupper aperture. The plug means cause a sealing surface to move in and out of contact with the scupper aperture. Means are provided to enhance the separation of the sealing surface from the scupper aperture when fluid flow is to be permitted, and to increase the fluid tightness of the seal when fluid flow is to be prevented. Means are also provided for reducing the effects of turbulence in the subject flow, and hence to enhance the separation of the immiscible fluids from one another.

US1857409 discloses automatic cut-off valves for storage tanks. It discloses a valve so arranged as to exclude air from entering the valve when liquid is being, drawn from the tank. Also discloses a float valve carrying a depending member adapted to surround and hang below the valve seat, thus being constantly immersed and below the liquid level, whereby air is prevented from entering the valve seat or discharge pipe at any time during the discharging period.

These facts illustrate the technical problem to be solved by the present disclosure.

### General description

The invention is defined by a pressurized hydropneumatic water tank and a method for converting a pressurized water tank, as defined in the independent claims 1, 8 and 9. The present disclosure includes a valve for a pressurized water tank, in particular an air retention valve located in the lower part of said tank.

The valve herein disclosed allows the inflow and outflow of water and air retention in a closed system, such as for example a pressurized water tank.

The air retention valve located in the lower part of said tank herein disclosed comprises a floating body, in particular a floater or float, which moves vertically guided by one or more guides, tie rods, grates, articulated arms or perforated plate structures.

According to the invention, when the floating body reaches a predetermined and minimum level of tank water, it comes closer to a tube of water circulation with the outside of the tank and by means of a lid joined to the floating body, the sealing or covering of the tank by the sealing or covering of the tube occurs, thus preventing the outflow of air and maintaining the tank pre-charge pressure.

The lid shape allows effective closure even when, due to high pressures and outflow of turbulent water, there are significant forces opposing the covering. In particular, stopper or ball shapes, which would only seal against the inner surface of the tube, may close the valve already after the total outflow of water and with air loss.

In an embodiment, in order for the sealing or covering performed by the floating body to be even more efficient, it comprises in its lower part a lid which is coated along its inner perimeter by a sealing material, for example a rubber, an o-ring or an equivalent material.

In an embodiment, said sealing material may also enclose the outer surface surrounding the top of said tube for water circulation with the outside of the tank.

The pre-charge pressure is defined as the system pressure slightly below the minimum working pressure (see paragraph 25).

In an embodiment, the lid and the floating body can be directly coupled to one another or can alternatively be coupled by means of a coupling element. If they are directly coupled, there is a saving of materials and the construction is made easier and more solid. If they are coupled by means of a coupling element, it is possible to adjust the distance between the predetermined minimum level of water in the tank and the lower position of the floating body corresponding to the tube covering.

In an embodiment, the lid comprised in the lower air retention valve for a pressurized water tank is responsible for the limitation of the coupling force. If there was no limit to the coupling, the floating body could remain attached to the outlet tube and render the valve unusable. Said lid has a diameter higher than the diameter of the tube for water circulation with the outside of the tank.

The present disclosure avoids the accumulation of dirt and particles on the top of the tube for water circulation with the outside of the tank and consequently avoids that the cover is ineffective. In this way, it is possible to prevent the outflow of air from the tank and keep the water tank pressurized.

In an embodiment, the lower air retention valve for a pressurized water tank herein disclosed may comprise a damping element in the lower surface of said lid between the lid and the top of said tube, said damping element having the following advantages:
- dampens the shock of the floater at the time of coupling,
- decreases the operating noise,
- protects the floating body from impacts, and
- because it is made of soft material, it acts as a second seal.

In an embodiment, the top for water circulation with the outside of the tank may have, for example, a conical shape. In this situation, the lid may also have a conical shape such that the coupling of the floating body to the top for water circulation with the outside of the tank is even more uniform. In this way, the valve herein disclosed replaces the current pressurizing systems, either the membrane tank systems or the injection valve feeding tank, as by: separating the air and water, the valve is able to retain the air under pressure in the interior of the tank and thus accumulate and supply, along with the other hydraulic elements of the supply system, pressurized water in the desired pressure ranges, reducing the use of the hydraulic pump.

The present disclosure is maintenance-free and therefore has a greater ease of use; also has lower cost of production and implementation and energy savings due to the regular operation of the pump.

In a water pressurizing system, a pressure tank is required to provide a smoother water supply, to prevent continuous or irregular operation of the water pump. Irregular operation of the water pump causes the motor to overheat and, above all, a high consumption of electric current due to the motor inertia at startup.

The pressure is accumulated in the tank with an air pre-charge slightly lowerthan the minimum pressure set in the pressure controller.

The present disclosure includes a lower air retention valve for a pressurized water tank comprising the following elements:
a tube for water circulation with the outside of the tank having a protuberant top for protruding into the interior of the tank;
a floating body vertically displaceable between an upper position and a lower position;
one or more guides for vertically guiding the displacement of the floating body;
a lid joined to the floating body, for covering the top of the tube and the outer surface surrounding said top, when the floating body is in the lower position corresponding to a predetermined minimum level of water in the tank.

Therefore, it is described a lower air retention valve for a pressurized water tank comprising:
a tube for water circulation with the outside of the tank with a protuberant top for protruding into the interior of the tank;
a floating body axially displaceable between a first distal position of said top and
a second proximal position of said top;
one or more guides for axially guiding the displacement of the floating body;
a lid joined to the floating body, for covering the top of the tube and the outer surface surrounding said top, when the floating body is in the proximal position corresponding to a predetermined minimum level of water in the tank; in particular, said axial displacement is configured such that the joined lid covers the top of the tube and the outer surface surrounding said top when the floating body is in the proximal position.

In an embodiment, for upper position is meant the first distal position of the tube for water circulation with the outside of the tank.

In an embodiment, for lower position is meant the second proximal position of the tube for water circulation with the outside of the tank.

In an embodiment, the lid or the tube of said lower air retention valve for a pressurized water tank may comprise a damping element for damping the coupling impact that sometimes can be rough, said damping element can be, for example, a rubber disc that allows damping the coupling impact and simultaneously has the advantage of functioning as an additional seal of the valve herein disclosed. The material used in said damping element may be flexible/soft and as an advantage it may seal between the lid and the outer surface surrounding the top of said tube.

According to the invention, the lid or the tube of said lower air retention valve for a pressurized water tank comprises a sealing circular gasket, so-called o-ring, for sealing between the lid and the outer surface surrounding the top of said tube.

In an embodiment, the lid or the outer surface surrounding the top of said tube, may have a conical shape for facilitating the covering.

In an embodiment, the lid and the floating body can be directly coupled to one another.

In an embodiment, the lid and the floating body can be coupled by a coupling element.

In an embodiment, the guide or guides for vertically guiding the displacement of the floating body are one or more tie rods, one or more grates, one or more articulated arms, one or more perforated plate structures.

In an embodiment, the floating body can be cylindrical, cubical, spherical or ovoid (or oval). It can have any shape, as long it allows its vertical guiding.

In an embodiment, and for best results, the floating body is preferably cylindrical, as it was observed that when the floating body is spherical and when it is at a critical point of operation of the air retention valve herein disclosed, i.e., when the water level decreases and is very close of the top of a tube for water circulation, a vortex is formed which is responsible for letting some of the air escape between the floating body and said tube, and that should be retained by the valve. This is undesirable since it decreases the operating efficiency of the valve.

In an embodiment, and to obtain even better results, the floating body is preferably cylindrical which allows increasing the lower surface of the floating body and thus various effects/advantages are obtained:
- preventing the air, which must be retained by the valve, to go around the floating body to the nozzle, and
- Increasing the suction effect, which drives the floating body to the nozzle more efficiently. In this way, the cylindrical floating body may be coupled in a single movement, unlike a spherical cylindrical floating body, which often may have to perform several movements until being definitively coupled.

In an embodiment, the floating body is cylindrical, the top of a tube for water circulation is conical.

In an embodiment, the lid or the outer surface surrounding the top of said tube, may have a conical shape for facilitating the covering while the floating body is cylindrical, the lid located in the lower part of the floating body may further comprise a sealing material, in particular an o-ring.

In an embodiment, in order for the sealing or covering performed by the floating body to be even more efficient, it comprises in its lower part a lid which is coated along its inner perimeter by a sealing material, for example a rubber , an o-ring or an equivalent material.

In an embodiment, and for even better results, the top of the tube for water circulation may be conical so as to suitably adjust the o-ring to the top of the tube, as the floating body moves for coupling with the top of the tube.

The present disclosure also relates to a pressurized water tank comprising said lower air retention valve described above, in particular relates to a tank without membrane.

The present disclosure further relates to a method for converting a membrane pressurized water tank into a non-membrane pressurized water tank, comprising the following steps:
removing the membrane from said tank;
assembling the lower air retention valve described above in the lower part of said tank.

The present disclosure further relates to a method for converting a pressurized water tank with a water feeding valve and a water discharge valve into a pressurized water tank without water feeding valve and without water discharge valve, comprising the following steps:
removing the water feeding valve and the water discharge valve;
assembling the lower air retention valve described above.

Throughout the description and claims, the word "comprise" and variations of the word have no intention of excluding other technical features, such as other components or steps. Additional objects, advantages and features of the present disclosure will become apparent to those skilled in the art upon examination of the description or may be learned by practice of the disclosure. The embodiments and figures are provided as a way of illustrating the disclosure, and are not intended to be limiting thereof. Furthermore, the present disclosure is to be understood as encompassing all possible combinations of particular or preferred embodiments described herein.

### Brief description of the drawings

The following figures provide preferred embodiments for illustrating the description and should not be seen as limiting the scope of the disclosure.

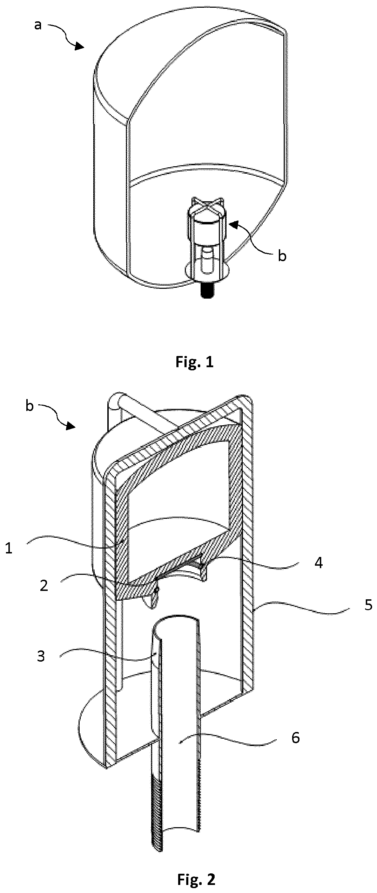

**Figure 1****:** Internal perspective of an embodiment of a water tank according to the present disclosure, wherein (a) represents a tank and (b) depicts a lower air retention valve for a pressurized water tank.
**Figure 2****:** Detail of an embodiment of the present disclosure wherein:
   1 represents a floating body;
   2 represents a lid, in particular a lid with a damping element;
   3 represents the top of a tube for water circulation, in particular represents the top of a tube for water circulation wherein said top has a conical configuration that allows a conical coupling;
   4 represents a sealing material, in particular an o-ring;
   5 represents a set of guides, in particular a set of external guides;
   6 represents the tube for water circulation.

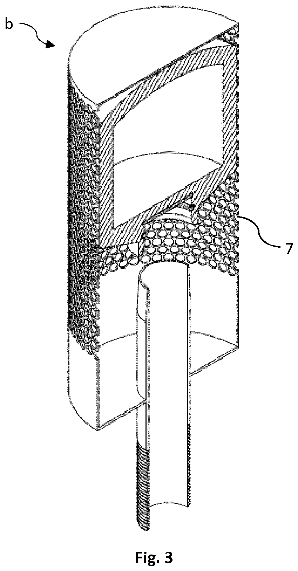

**Figure 3****:** Detail of an embodiment of the present disclosure wherein the guides are replaced by a cylindrical grate **7** for guiding the displacement of the floating body **1**.

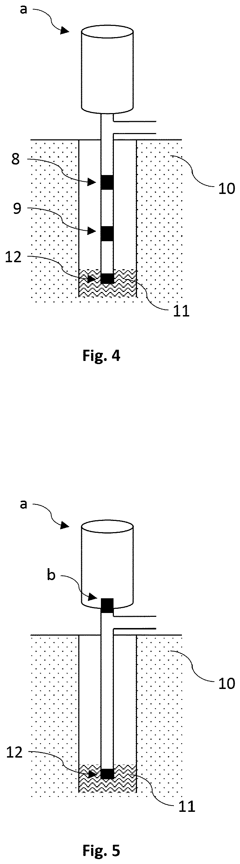

**Figure 4****:** Detail of a prior art example wherein **8** represents an air feeding valve; **9** represents a water discharge valve; **10** represents the underground; **11** represents water; **12** represents a submersible electric pump; in which example the valve herein disclosed may be incorporated in the tank **(a).**
**Figure 5****:** Detail of an example wherein the valve **(b)** herein disclosed is incorporated in the tank **(a).**

### Detailed description

Pressure or hydropneumatic tanks, for example, accumulate a mixture of air and water. The properties of the air confer a higher capacity of compression and expansion in comparison with the water, and therefore it is used to accumulate pressure in the tank.

According to the invention, the valve of the present disclosure allows air or water to flow into the tank, however, it prevents air from flowing out as the lid comprises a sealing material which is intentionally disposed below the water level of the floating body. In this way, the air outlet remains always submerged.

During a normal working cycle, the water level reaches a maximum level of height and a minimum level of height. When the water level reaches a maximum level it reaches a minimum expansion of air and a desired maximum pressure; and also reaches a minimum level, which corresponds to a maximum expansion of air and a desired minimum pressure. In both the described situations, the lower air retention valve for a pressurized water tank remains open, i.e. the floating body does not reach the coupling zone. In this way, the air release valve herein disclosed is not used in a normal working cycle.

During an abnormal working cycle which results in emptying the water from the tank or other defect leading to its discharge, the floating body reaches the coupling zone and the lower air retention valve for a pressurized water tank closes. In this situation the water level drops, and this decrease of the water level is accompanied by the lowering of the floating body until it reaches the coupling zone, sealing the system and preventing the outflow of air. Consequently the pre-charge pressure is never lost. The tank is able to function normally without the need to reset the pre-charge or other type of intervention.

In an abnormal working cycle the following situations may occur: power failure in the pumps; retention valve failure; entry of air into the system due to pump de-priming or lack of water level protection; rupture of the piping; tank leakage; malfunction of the pressure controller (pressure switch or pressure sensor). In this way, the herein disclosed air check valve keeps the tank pressurized.

As noted above, the coning is an improvement which facilitates the engagement between the lid and the tube, as well as improves the sealing. For correct operation of the lower air retention valve for a pressurized water tank, it is only necessary for it to seal the tank and prevent the outflow of water (pressure).

In an embodiment, the lower air retention valve for a pressurized water tank may be dimensioned as a function of the working flow rate and only limited by the inner space of the tank.

In an embodiment, the valve herein disclosed can operate in a range of relative pressures between 1-20 bar, preferably between 1-10 bar.

In an embodiment, the valve may be constructed to withstand higher pressures, being necessary to strengthen the floating body and adapt the valve to the more demanding operation resulting from the higher pressures.

In an embodiment the typical valve dimensions are about 50-120 mm in diameter.

In an embodiment, the present disclosure may be adapted/implemented to tanks with membranes and without membranes that already exist, with relative easiness in tanks having a flange or a screw thread in the bottom. The only dependence for this adaptation/implementation is on the diameter or screw thread of the bottom of the tank that should allow the introduction/installation of the valve herein disclosed.

In an embodiment, the guides may be replaced by other structures capable of performing the same function, such as for example an articulated arm, or a perforated plate structure or a grate. However, these possible alterations, although fulfilling the same function, are more expensive than the tie rods/guides.

In an embodiment, the guides may be replaced by a grate bearing the floating body/valve therein (Figure 3).

In an embodiment, the floating body in the exemplary case is cylindrical in shape, in this way the grate guides the floating body in the vertical movement which allows the inflow and outflow of water.

In an embodiment, the floating body and lid are coupled. The functions of this set are, in particular, to float and to cover the tube for water circulation with the outside of the tank.

In an embodiment, the disclosure herein shown may have a structure responsible for floating decoupled from another structure responsible for covering the tube for water circulation with the outside of the tank. However, it will be necessary that the movements of these structures are coordinated.

The valve herein disclosed may be incorporated into a stainless steel tank with air injection or membrane, in a fibre tank with membrane and in an iron tank with membrane. In the case of a tank with membrane it will be necessary to remove the membrane from the tank and then to assemble the lower air retention valve herein disclosed.

Although in the present disclosure only particular embodiments of the disclosure have been represented and described, the person with ordinary skill in the art will know how to introduce modifications and substitute technical features by other equivalent ones, depending on the requirements of each situation, without departing from the scope of protection defined in the appended claims.

The disclosed embodiments are combinable. The following claims set out particular embodiments of the disclosure.

## Claims

1. Pressurized hydropneumatic water tank, the tank comprising a lower air retention valve comprising:
a tube (6) for water circulation with the outside of the tank having a protuberant top for protruding into the interior of the tank;
a floating body (1) vertically displaceable between an upper position and a lower position;
one or more guides (5) for vertically guiding the displacement of the floating body (1);
a lid (2) joined to the floating body (1), for covering the top of the tube (3) and the outer surface surrounding said top when the floating body (1) is in the lower position corresponding to a predetermined minimum level of water in the tank, the outflow of air is prevented and the water tank is maintained pressurized, and wherein the lid (2) comprises a sealing material in its lower surface for sealing between the lid (2) and the top of said tube (3);
wherein the lid comprises the sealing material arranged in the floating body below the water level,
**characterized in that** the lid (2) or the tube (6) comprises an O-ring sealing between the lid (2) and the outer surface surrounding the top of said tube (3).

2. Pressurized hydropneumatic water tank according to the previous claim wherein the lid (2), or the outer surface surrounding the top of said tube (3), has a conical shape for facilitating the covering.

3. Pressurized hydropneumatic water tank according to the previousclaims wherein the lid (2) and the floating body (1) are directly coupled to one another.

4. Pressurized hydropneumatic water tank according to any of claims 1-3 wherein the lid (2) and the floating body (1) are coupled by a coupling element.

5. Pressurized hydropneumatic water tank according to any of the previous claims wherein the guide or guides (5) for vertically guiding the displacement of the floating body (1) are one or more tie rods, or one or more grates, or one or more articulated arms, or one or more perforated plate structures.

6. Pressurized hydropneumatic water tank according to any of the previous claims wherein the floating body (1) is cylindrical, cubical, spherical or ovoid.

7. Pressurized hydropneumatic water tank according to any of the previous claims wherein the tank is a tank without membrane, or a fibre tank, or a stainless steel tank.

8. Method for converting a membrane pressurized water tank into a non-membrane pressurized water tank according to any of the claims 1-7, comprising the following steps:
removing the membrane from said tank;
assembling the lower air retention valve of any of claims 1-7 in the lower part of said tank.

9. Method for converting a pressurized water tank with a water feeding valve and a water discharge valve into a pressurized water tank according to any of the claims 1-7, without water feeding valve and without water discharge valve, comprising the following steps:
removing the water feeding valve and the water discharge valve;
assembling the lower air retention valve of any of claims 1-7 in the tank.

## Patentansprüche

1. Hydropneumatischer Druckwasserbehälter, wobei der Behälter ein unteres Druckhalteventil aufweist, umfassend:
ein Rohr (6) für die Wasserzirkulation mit dem Äußeren des Behälters mit einer vorstehenden Spitze, die in das Innere des Behälters hineinragt;
einen Schwimmkörper (1), der vertikal zwischen einer oberen und einer unteren Position verschiebbar ist;
eine oder mehrere Führungen (5) für das vertikale Verschieben des Schwimmkörpers (1);
einen Deckel (2), der mit dem Schwimmkörper (1) verbunden ist, um die Oberseite des Rohrs (3) und die äußere Oberfläche um die genannte Spitze abzudecken, wenn sich der Schwimmkörper (1) in der unteren Position befindet, die einem vorbestimmten minimalen Wasserstand in dem Behälter entspricht und das Ausströmen von Luft verhindert und der Wasserbehälter unter Druck gehalten wird, und wobei der Deckel (2) ein Dichtungsmaterial in seiner unteren Oberfläche umfasst, das für die Abdichtung zwischen dem Deckel (2) und der Oberseite des genannten Rohrs (3) sorgt;
wobei der Deckel das im Schwimmkörper unterhalb des Wasserspiegels angeordnete Dichtungsmaterial umfasst,
**dadurch gekennzeichnet, dass** der Deckel (2) oder das Rohr (6) eine O-Ring-Dichtung zwischen dem Deckel (2) und der äußeren Oberfläche, die den oberen Teil des genannten Rohrs (3) umgibt, aufweist.

2. Hydropneumatischer Druckwasserbehälter nach dem vorangehenden Anspruch, wobei der Deckel (2) oder die äußere Oberfläche, die den oberen Teil des genannten Rohrs (3) umgibt, eine konische Form aufweist, um das Abdecken zu erleichtern.

3. Hydropneumatischer Druckwasserbehälter nach einem der vorangehenden Ansprüche, wobei der Deckel (2) und der Schwimmkörper (1) direkt miteinander verbunden sind.

4. Hydropneumatischer Druckwasserbehälter nach einem der Ansprüche 1-3, wobei der Deckel (2) und der Schwimmkörper (1) durch ein Kupplungselement verbunden sind.

5. Hydropneumatischer Druckwasserbehälter nach einem der vorangehenden Ansprüche, wobei die Führung oder die Führungen (5) für das vertikale Verschieben des Schwimmkörpers (1) eine oder mehrere Zugstangen oder ein oder mehrere Gitter oder ein oder mehrere Gelenkarme oder eine oder mehrere Lochblechstrukturen sind.

6. Hydropneumatischer Druckwasserbehälter nach einem der vorangehenden Ansprüche, wobei der Schwimmkörper (1) zylindrisch, würfelförmig, kugelförmig oder eiförmig ist.

7. Hydropneumatischer Druckwasserbehälter nach einem der vorangehenden Ansprüche, wobei der Behälter ein Behälter ohne Membran oder ein Kunststoffbehälter oder ein Edelstahlbehälter ist.

8. Verfahren zur Umwandlung eines Druckwasserbehälters mit Membrane in einen Druckwasserbehälter ohne eine Membrane nach einem der Ansprüche 1-7, umfassend die folgenden Schritte:
Entfernen der Membran aus dem genannten Behälter;
Einbau des unteren Druckhalteventils nach einem der Ansprüche 1-7 in den unteren Teil des Behälters.

9. Verfahren zur Umwandlung eines Druckwasserbehälters mit einem Wassereinlassventil und einem Wasserablassventil in einen Druckwasserbehälter nach einem der Ansprüche 1-7, ohne Wassereinlassventil und ohne Wasserablassventil, umfassend die folgenden Schritte:
Entfernen des Wassereinlassventils und des Wasserablassventils;
Einbau des unteren Druckhalteventils nach einem der Ansprüche 1-7 in den Behälter.

## Revendications

1. Réservoir d'eau hydropneumatique sous pression, le réservoir comprenant une valve de retenue d'air inférieure comprenant :
un tube (6) pour la circulation d'eau avec l'extérieur du réservoir ayant une partie supérieure proéminente pour qu'il ressorte à l'intérieur du réservoir ;
un corps flottant (1) pouvant être déplacé verticalement entre une position supérieure et une position inférieure ;
un ou plusieurs guides (5) pour guider verticalement le déplacement du corps flottant (1) ;
un couvercle (2) joint au corps flottant (1), pour couvrir la partie supérieure du tube (3) et la surface externe entourant ladite partie supérieure lorsque le corps flottant (1) est dans la position inférieure correspondant à un niveau minimum prédéterminé d'eau dans le réservoir, la sortie d'air est évitée et le réservoir d'eau est maintenu sous pression, et dans lequel le couvercle (2) comprend un matériau de scellement dans sa surface inférieure pour sceller entre le couvercle (2) et la partie supérieure dudit tube (3) ;
dans lequel le couvercle comprend le matériau de scellement arrangé dans le corps flottant en-dessous du niveau de l'eau,
**caractérisé en ce que** le couvercle (2) ou le tube (6) comprend un joint torique entre le couvercle (2) et la surface externe entourant la partie supérieure dudit tube (3).

2. Réservoir d'eau hydropneumatique sous pression selon la revendication précédente dans lequel le couvercle (2), ou la surface externe entourant la partie supérieure dudit tube (3), a une forme conique pour faciliter la couverture.

3. Réservoir d'eau hydropneumatique sous pression selon les revendications précédentes dans lequel le couvercle (2) et le corps flottant (1) sont directement accouplés l'un à l'autre.

4. Réservoir d'eau hydropneumatique sous pression selon l'une quelconque des revendications 1-3 dans lequel le couvercle (2) et le corps flottant (1) sont accouplés par un élément d'accouplement.

5. Réservoir d'eau hydropneumatique sous pression selon l'une quelconque des revendications précédentes dans lequel le guide ou les guides (5) pour guider verticalement le déplacement du corps flottant (1) sont un ou plusieurs tirants, ou une ou plusieurs grilles, ou un ou plusieurs bras articulés, ou une ou plusieurs structures en plaque perforées.

6. Réservoir d'eau hydropneumatique sous pression selon l'une quelconque des revendications précédentes dans lequel le corps flottant (1) est cylindrique, cubique, sphérique ou ovoïde.

7. Réservoir d'eau hydropneumatique sous pression selon l'une quelconque des revendications précédentes dans lequel le réservoir est un réservoir sans membrane, ou un réservoir en fibre, ou un réservoir en acier inoxydable.

8. Procédé de conversion d'un réservoir d'eau sous pression à membrane en un réservoir d'eau sous pression sans membrane selon l'une quelconque des revendications 1-7, comprenant les étapes suivantes :
retirer la membrane dudit réservoir ;
assembler la valve de retenue d'air inférieure de l'une quelconque des revendications 1-7 dans la partie inférieure dudit réservoir.

9. Procédé de conversion d'un réservoir d'eau sous pression avec une soupape d'approvisionnement en eau et une soupape d'évacuation d'eau en un réservoir d'eau sous pression selon l'une quelconque des revendications 1-7, sans soupape d'approvisionnement en eau et sans soupape d'évacuation d'eau, comprenant les étapes suivantes :
retirer la soupape d'approvisionnement en eau et la soupape d'évacuation d'eau ;
assembler la valve de retenue d'air inférieure de l'une quelconque des revendications 1-7 dans le réservoir.
